# EUROPÄISCHE PATENTANMELDUNG

(11) **EP 1 211 051 A2**
(43) Veröffentlichungstag der Anmeldung: **05.06.2002**
(21) Anmeldenummer: 01109557.7
(22) Anmeldetag: 18.04.2001
(51) Int. Cl.: B29C 51/08, B29C 51/30

(54) **Verfahren und Vorrichtung zur Herstellung einer präzisen Verbindung zwischen zwei Abdeckmaterialien für ein Verkleidungsteil**

(30) Priorität: 01.12.2000 US 729140
(71) Anmelder: R+S Technik GmbH, 63073 Offenbach (DE)
(72) Erfinder: Spengler, Gerhard, 60388 Frankfurt 60 (DE)
(74) Vertreter: Schieferdecker, Lutz, Dipl.-Ing.

(57) **Zusammenfassung**

Ein Verkleidungsteil (1) mit einem Träger (2) und zwei unterschiedlichen Abdeckmaterialien (3, 4), die nicht zusammengefügt werden, sondern unabhängig durch eine Schmelzkleberkontaktadhäsion klebend auf den Träger (2) aufgeklebt werden. Die Verbindung (7) wird von einer Vertiefung (6) des Trägers aufgenommen, die durch Pressen unter Verwendung einer Formvorrichtung geschlossen wird, die einen horizontal bewegbaren Preßstempel (13) umfaßt, der einen Preßspalt (16) im Verhältnis zu einer vorstehenden Kante (11A) eines feststehenden Formwerkzeugs (11) bildet. Eine Preßklinge (22) wirkt mit einer Gegenklemmklinge (26) zusammen, um den Träger und die Verbindung der Abdeckfolien in klemmender Weise zu halten und dann in den Preßspalt hineinzupressen. Die Preßklinge wird dann zurückgezogen, während der Preßstempel den Preßspalt durch Pressen schließt, um eine eng geschlossene Vertiefung im Träger zu bilden, wobei die Verbindung darin sauber eingepreßt wird.

## Beschreibung

### GEBIET DER ERFINDUNG

Die vorliegende Erfindung betrifft ein Verfahren und eine Vorrichtung zur Herstellung eines Verkleidungsteils und insbesondere eines Innenraumverkleidungsteils für ein Kraftfahrzeug, bei dem die Zierabdeckung des Verkleidungsteils zwei unterschiedliche Abdeckmaterialien umfaßt.

### QUERVERWEIS AUF VERWANDTE ANMELDUNG

Die vorliegende Anmeldung ist eine Teilfortführung der am 21. Oktober 1998 von demselben Erfinder eingereichten US-Anmeldung 09/176,356.

### STAND DER TECHNIK

In der Automobilindustrie ist die Verwendung von Innenraumverkleidungsteilen, wie beispielsweise Türinnenverkleidungen, Armaturentafeln und dergleichen, mit einer Zierabdeckung aus zwei unterschiedlichen Abdeckmaterialien für das gleiche Verkleidungsteil bekannt. Ein derartiges Verkleidungsteil mit einem zweiteiligen Abdeckmaterial wird von den Kunden gewünscht, um beispielsweise einen "Zwei-Ton-Effekt", bei dem die beiden unterschiedlichen Abdeckmaterialien verschiedene Farben aufweisen, oder einen hochwertigen oder "Luxus-Effekt" zu erzielen, bei dem es sich bei den beiden unterschiedlichen Abdeckmaterialien um unterschiedliche Materialarten, wie beispielsweise eine Abdeckzierfeinfolie oder eine Stoffzierverkleidung, handelt, oder bei dem die unterschiedlichen Abdeckmaterialien unterschiedliche Grade einer "weich anmutenden" Verkleidung oder dergleichen aufweisen.

Um derartige Fahrzeugverkleidungsteile mit zweiteiligen Abdeckmaterialien herzustellen, ist es bisher übliche Praxis, die beiden unterschiedlichen Abdeckmaterialien zusammenzufügen, bevor die zusammengefügte Abdeckfolie auf den Träger des Verkleidungsteils aufgebracht wird. Das Zusammenfügen der beiden unterschiedlichen Abdeckmaterialien erfolgt in herkömmlicher Weise durch Thermoschweißen, Verkleben oder Vernähen. Nachdem das Zusammenfügen der beiden unterschiedlichen Abdeckmaterialien auf diese Weise erfolgt ist, ist es im allgemeinen erforderlich, die Fugennaht zu verdecken oder abzudecken, um so die Vernähung oder überquellendes Klebermaterial oder dergleichen zu verdecken. Dies wird in herkömmlicher Weise durch eine Zierleiste, beispielsweise eine Leiste aus Kunststoff, Chrom, Holz oder dergleichen, erzielt, die auf die Fugennaht des fertigen Verkleidungsteils aufgebracht wird. Alternativ ist versucht worden, die Fugennaht in eine im Träger vorgesehene Nut einzupressen, um die Fugennaht auf diese Weise zu verdecken.

Die vorstehend beschriebenen herkömmlichen Praktiken und die sich daraus ergebenden Verkleidungsteile mit zweiteiligem Abdeckmaterial weisen zahlreiche Nachteile auf, zu denen auch der folgende zählt. Das Vorverfahren zum Zusammenfügen der beiden unterschiedlichen Abdeckmaterialien beinhaltet zusätzliche Verarbeitungs- und Handhabungsschritte, die erhöhte Kosten und eine größere Wahrscheinlichkeit defekter Teile mit einer höheren Ausschußrate zur Folge haben. Des weiteren erfordert die Anwendung einer Zierleiste zur Verdeckung der Fugennaht an der fertigen Türinnenverkleidung, Armaturentafel oder dergleichen zusätzliche Schritte und zusätzliches Material, was wiederum höhere Kosten und höhere Ausschußraten zur Folge hat.

Der wichtigste Punkt ist jedoch der, daß die bisher bekannten Verfahren zur Herstellung eines Verkleidungsteils mit einem zweiteiligen Abdeckmaterial bei der Durchführung des Zusammenfügens der beiden unterschiedlichen Abdeckmaterialien äußerste Präzision, anschließendes Ausrichten des zusammengefügten zweiteiligen Abdeckmaterials auf dem Träger des Verkleidungsteils und Ausrichten der Fugennaht zu der im Träger vorgesehenen Nut und/oder Ausrichten der Abdeckzierleiste auf der Fugennaht erfordern. In der Praxis hat sich gezeigt, daß dieser hohe Präzisionsgrad nicht zuverlässig erzielt werden kann, und als Folge davon bleibt die Fugennaht am fertigen Verkleidungsteil zumindest teilweise sichtbar, d.h. die Fugennaht tritt aus der Nut des Trägers oder unter der Abdeckzierleiste heraus. Dies führt zu einer inakzeptabel hohen Ausschußrate bei den fertigen Verkleidungsteilen.

Darüber hinaus ist es für den Arbeitsgang des Einpressens der Fugennaht in eine im Träger vorgesehene Nut notwendig, die Nut im Träger vorzuformen, was zusätzliche Verarbeitungsschritte erfordert, und es ist notwendig, die Nut breit genug auszubilden, um einen ausreichenden Toleranzbereich bereitzustellen, so daß eine Preßklinge die Fugennaht des Abdeckmaterials nach unten in die Nut hineinpressen und dann zurückgezogen werden kann. Anders ausgedrückt: Die Nut im Träger muß bei herkömmlichen Verfahren breit genug sein, um die Dicke der beiden Schichten des Abdeckmaterials auf beiden zusammengefügten Seiten sowie die Dicke der Preßklinge, die das Abdeckmaterial in die Nut hineinpreßt, aufnehmen zu können. Nach dem Zurückziehen der Preßklinge verbleibt zwangsläufig ein Spalt an der Stelle, in die die Preßklinge hineingedrückt wurde. Aufgrund der vorerwähnten Defekte bei der Ausrichtung der Fugennaht zur Nut, aber auch wegen der Breite der herkömmlichen Nut, die kein "geschlossenes" oder "gekräuseltes" Aussehen aufweist, entsteht als Ergebnis jedenfalls ein nicht zufriedenstellendes Verkleidungsteil.

### KURZBESCHREIBUNG DER VORLIEGENDEN ERFINDUNG

Angesichts der vorstehenden Ausführungen besteht ein Ziel der vorliegenden Erfindung darin, ein Verkleidungsteil insbesondere für den Innenraum eines Kraftfahrzeugs bereitzustellen, das eine Zierabdeckung aus mindestens zwei unterschiedlichen Abdeckmaterialien umfaßt, bei der die beiden Abdeckmaterialien vorher nicht zusammengefügt werden und die Verbindungslinie in einer Nut oder Vertiefung des Trägers verdeckt angeordnet ist, so daß keine Verbindungszierleiste benötigt wird. Es ist ein weiteres Ziel der vorliegenden Erfindung, ein Verfahren und eine Vorrichtung zur Herstellung eines solchen Verkleidungsteils bereitzustellen, bei denen keine Arbeitsgänge zur vorab erfolgenden Verbindung erforderlich sind, und die sicherstellen, daß die Verbindungslinie zwischen den beiden Abdeckmaterialien präzise positioniert und von der Nut des Trägers aufgenommen wird. Die vorliegende Erfindung zielt weiterhin darauf ab, die anderen Nachteile nach dem Stand der Technik zu vermeiden oder zu beseitigen sowie zusätzliche Vorteile, wie aus der vorliegenden Beschreibung erkennbar, zu erzielen.

Die vorstehenden Ziele werden mit einem Verkleidungsteil nach vorliegender Erfindung erzielt, das einen Träger sowie eine Zierabdeckung mit zwei unterschiedlichen Abdeckfolien, zu denen Abdeckfolien mit verschiedenen Farben und/oder Abdeckfolien aus unterschiedlichen Materialien, wie beispielsweise eine Stoffabdeckung oder eine Feinfolienverkleidung, zählen können, umfaßt. Bei der Feinfolie kann es sich beispielsweise um eine Kunstlederfolie oder eine Vinylfolie oder eine aus thermoplastischem Polyolefin (TPO) bestehende Folie handeln. Die Abdeckfolie kann eine Rückenbeschichtung aus Polyolefinschaum oder Polyolefinfeinfolie zur Erzielung einer Schmelzkleberverklebung umfassen. Der Träger umfaßt vorzugsweise Naturfasern und ein Polyolefinmaterial und insbesondere Polypropylen. Ein Beispiel für ein bevorzugtes Material ist ein mehrere Schichten aufweisendes Trägermaterial, das unter dem Warenzeichen "LOPREFIN" bei der R + S Technik GmbH in Offenbach, Deutschland, erhältlich ist.

Der Träger umfaßt eine darin ausgebildete Vertiefung, wobei eine Verbindung der beiden unterschiedlichen Abdeckfolien in diese Vertiefung hineingepreßt wird. Die beiden unterschiedlichen Abdeckfolien werden vorher nicht miteinander verbunden, sondern statt dessen während der Bildung der Vertiefung einfach in diese hineingepreßt. Die Vertiefung wird insbesondere dadurch gebildet, daß das Trägermaterial, während der Träger gerade geformt und mit den Abdeckfolien laminiert wird, auf die Verbindungsfläche der beiden unterschiedlichen Abdeckfolien aufgepreßt wird.

Die Abdeckfolien werden aufgrund der Schmelzkleberadhäsionswirkung, die während des Bildungsverfahrens durch die Oberfläche des heißen Trägers entsteht, auf den Träger auflaminiert und klebend damit verbunden. Wenn nämlich das Trägermaterial für die Laminierung erwärmt wird, wird das darin enthaltene Polypropylen erweicht und zumindest teilweise geschmolzen, um eine Klebeadhäsion zur Verbindung der beiden Abdeckfolien auf dem Träger und auch in die Vertiefung des Trägers hinein zu bewirken. Somit ist kein zusätzliches Vernähen oder Verkleben erforderlich, um die beiden Abdeckfolien miteinander zu verbinden oder eine Verklebung der Abdeckfolien auf dem Träger zu erzielen.

Die vorstehenden Ziele werden weiterhin im allgemeinen mit Hilfe eines Verfahrens nach der Erfindung der vorstehend genannten Hauptanmeldung 09/176,356 der vorliegenden Teilfortführung erreicht. Nach dem allgemeinen Verfahren, das sowohl für die Hauptanmeldung als auch für die vorliegende Teilfortführung zur Anwendung kommt, werden die beiden unterschiedlichen Abdeckfolien separat auf eine vorerwärmte Trägerfolie aufgelegt, wodurch die Abdeckfolien aufgrund eines durch das heiße Polypropylen bewirkten Schmelzklebereffekts auf dem vorerwärmten Träger ankleben. Die Randkanten der Abdeckfolien, die die Zwischenverbindung bilden, werden dann von oben durch eine Preßklinge nach unten gedrückt, um so die Vertiefung im Träger zu bilden und die Verbindungsfläche der Abdeckfolien in die Vertiefung hineinzudrücken. Anschließend wird die Vertiefung von unten her zusammengepreßt, während die Preßklinge von oben zurückgezogen wird, um so die Vertiefung durch Zusammenpressen zu schließen, wodurch die Verbindung der beiden unterschiedlichen Abdeckfolien in der gepreßten Vertiefung festgehalten wird.

Indem der Träger auf diese Weise gepreßt und von oben her mit einer Preßklinge nach unten gedrückt und der Preßvorgang fortgesetzt und mit sich zurückziehender Preßklinge zum Abschluß gebracht wird, wird sichergestellt, daß die Vertiefung durch das Zusammenpressen geschlossen wird, ohne daß ein sich aus der Breite oder Dicke der Preßklinge ergebender Spalt oder Zwischenraum entsteht. Aufgrund des klebenden Schmelzklebereffekts der heißen Trägerfolie werden die Randkanten der beiden unterschiedlichen Abdeckfolien durch das Zusammenpressen in klebender Weise sicher auf dem Träger in der Vertiefung fixiert, so daß es nicht erforderlich ist, die Randkanten zusammenzufügen oder durch eine Verklebung miteinander zu verbinden.

Da der Preßspalt anfänglich viel breiter als die fertige zusammengepreßte Vertiefung ist, wird der erforderliche Präzisionsgrad für das Ausrichten oder Einpassen der Verbindungslinie der beiden unterschiedlichen Abdeckfolien über dem Preßspalt wesentlich verringert. Die Verbindung der beiden Abdeckfolien muß nämlich einfach nur zu dem anfänglich breiten offenen Spalt in den für die Ausbildung der zusammengepreßten Vertiefung verwendeten Formwerkzeugen hin ausgerichtet werden, und wenn dieser Spalt geschlossen oder zusammengepreßt ist, ist die fertige zusammengepreßte Vertiefung viel enger als der ursprünglich vorgesehene Spalt. Die größere Breite des anfänglich offenen Spalts trägt somit zu einer größeren Toleranz für die Positionierung der Verbindungslinie der beiden Abdeckfolien bei, während der engere geschlossene Spalt die Breite der fertigen Vertiefung, in der die Randkanten der Abdeckfolien zusammengepreßt sind, definiert.

Darüber hinaus trägt die Tiefe des Preßspalts auch zum Toleranzbereich für das endgültige Verdecken der Verbindungslinie der beiden unterschiedlichen Abdeckfolienmaterialien bei. Weil der Spalt so tief und so breit ausgebildet wird, wie es im anfänglichen offenen Zustand der Formwerkzeuge erforderlich ist, ist es einfach, eine große Toleranz für die ordnungsgemäße Positionierung der beiden unterschiedlichen Abdeckfolien auf dem Träger bereitzustellen und den Träger anschließend auf dem Formwerkzeug zu positionieren und dennoch sicherzustellen, daß das fertige Verkleidungsteil eine vollständig geschlossene oder zusammengepreßte Vertiefung aufweist, wobei die Verbindung der beiden unterschiedlichen Abdeckfolien innerhalb dieser Vertiefung vollkommen verdeckt wird. Die sich ergebende Vertiefung weist ein sauberes und gekräuseltes, geschlossenes Aussehen auf, da die Innenbreite der Trägervertiefung nicht größer als die Summe der Dicken der beiden in der zusammengepreßten Vertiefung überlappten und davon aufgenommenen Abdeckfolien ist.

Die vorstehenden Ziele werden weiterhin im allgemeinen in einer Formwerkzeugvorrichtung nach der Hauptanmeldung und nach vorliegender Erfindung erreicht, wobei diese Vorrichtung einen unteren Formabschnitt und einen oberen Formabschnitt umfaßt, die im Verhältnis zueinander im allgemeinen vertikal bewegbar sind. Die Formwerkzeugvorrichtung umfaßt weiterhin einen Gleitrahmen, der die Kanten der Trägerfolie mit den darauf plazierten Abdeckfolien festhält, diese laminierte Folie in die Form transportiert und sie während des Formvorgangs unter entsprechender Spannung hält. Der untere Formabschnitt umfaßt ein feststehendes Basissegment oder feststehendes Werkzeugsegment, einen vertikal bewegbaren primären unteren Formstempel, der im Verhältnis zum feststehenden Werkzeugsegment vertikal bewegbar ist, sowie einen Preßstempel, der im Verhältnis zum feststehenden Werkzeugsegment horizontal bewegbar ist und zwischen einer vorstehenden Kante oder einem vorstehenden Rand des Preßstempels und einer vorstehenden Kante oder einem vorstehenden Rand des feststehenden Werkzeugsegments einen Preßspalt bildet. Der obere Formabschnitt umfaßt einen oberen primären Formstempel, eine Preßklinge, die im Verhältnis zum oberen primären Formstempel vertikal bewegbar ist, sowie einen Kantenkräuselring, der im Verhältnis zum oberen primären Formstempel vertikal bewegbar ist.

Der untere primäre Formstempel wirkt mit dem oberen primären Formstempel zusammen, um dazwischen die Hauptkonturen des fertigen Verkleidungsteils zu bilden. Die Preßklinge des oberen Formabschnitts wirkt mit dem zwischen dem feststehenden Werkzeugsegment und dem horizontal bewegbaren Preßstempel des unteren Formabschnitts ausgebildeten Preßspalt zusammen, um die eingepreßte Vertiefung im Verkleidungsteil zu bilden, wobei die Verbindung zwischen den beiden unterschiedlichen Abdeckfolien nach unten in diese geschlossene eingepreßte Vertiefung hineingepreßt wird. Der vertikal bewegbare Kantenkräuselring wirkt mit einer entsprechenden Kante des Preßstempels des unteren Formabschnitts zusammen, um eine um die Außenkontur des Verkleidungsteils verlaufende geschlossene Kräuselkante zu bilden.

Bei der praktischen Durchführung des vorstehend beschriebenen ursprünglichen Verfahrens unter Verwendung der vorstehend beschriebenen ursprünglichen Vorrichtung nach vorstehend erwähnter Hauptanmeldung hat sich gezeigt, daß das ursprüngliche Verfahren und die ursprüngliche Vorrichtung noch weiter verbessert werden könnten. Es ist nämlich manchmal nur schwierig sicherzustellen, daß die Verbindung zwischen den beiden Abdeckfolien in der Vertiefung des Trägers präzise ausgerichtet bleibt, selbst unter Berücksichtigung des Toleranzbereichs, der sich bei dieser eingepreßten Vertiefung, wie vorstehend beschrieben, ergibt. Es hat sich in der Praxis insbesondere gezeigt, daß die beiden auf dem Träger klebenden Abdeckfolienmaterialien sehr häufig ein unterschiedliches Gleit- oder Dehnverhalten zeigen, wenn die Preßklinge des oberen Formabschnitts die Verbindungslinie der beiden Abdeckfolien in den Preßspalt im Preßstempel des unteren Formabschnitts hineinschiebt.

Da die beiden Abdeckfolien auf dem Träger in dem Gleitrahmen um den Umfang der Formwerkzeugvorrichtung herum unter Spannung gehalten werden, gleiten die beiden Abdeckfolien, abhängig von der jeweils auf die Abdeckfolien ausgeübten Spannung, absichtlich in einem gewissen Umfang. Wenn die beiden entsprechenden Abdeckfolien aus zwei unterschiedlichen Materialien bestehen, die jeweils unterschiedliche Dehn- oder Wärmedehneigenschaften aufweisen, oder wenn die beiden Abdeckfolien unterschiedliche Größen aufweisen oder unterschiedlichen Verformungsgraden auf den gegenüberliegenden Seiten der Verbindungslinie ausgesetzt sind, dann üben diese beiden Abdeckfolien (und der darunterliegende Träger) unterschiedliche Spannungsgrade aus und unterliegen einem unterschiedlichen Gleitverhalten im Gleitrahmen.

Als Folge davon hat sich in der Praxis häufig gezeigt, daß die Verbindungslinie, während sie von der Preßklinge nach unten in den Preßspalt geschoben wird, unabsichtlich seitlich aus dem Preßspalt herausgleitet. Dieses Phänomen tritt insbesondere dann auf, wenn die Verbindungslinie oder die entlang der Verbindungslinie geformte Kontur eine komplizierte Biegung oder dergleichen aufweist. In einem solchen Fall hat es sich gezeigt, daß die Verbindungslinie in einigen Flächen innerhalb des Preßspalts (und damit innerhalb der fertigen eingepreßten Vertiefung des Trägers) verbleibt, während sie in anderen Flächen seitlich aus der fertigen eingepreßten Vertiefung des Trägers herausgeschoben wird. Das Ergebnis ist unbefriedigend, so daß die betroffenen Stücke ausgesondert werden müssen.

In gewissem Umfang kann das vorgenannte Phänomen des unerwünschten seitlichen Weggleitens durch entsprechende Justierung der Klemmspannung in unterschiedlichen Flächen des Gleitrahmens vermieden oder ausgeglichen werden. Jede geringfügige Veränderung der Materialeigenschaften der beiden Abdeckfolien, der Verfahrenstemperaturen, der Abmessungen der Abdeckfolien oder dergleichen kann jedoch erneut ein unbeabsichtigtes seitliches Weggleiten der Verbindungslinie im Verhältnis zur Vertiefung im Träger bewirken. Es wäre unpraktisch und aus wirtschaftlichen Gründen unvertretbar, eine mechanische Nachjustierung oder Kalibrierung der Gleitrahmenspannung ständig oder häufig vornehmen zu müssen.

Angesichts der vorstehenden Ausführungen stellt die vorliegende Erfindung, verglichen mit der vorstehend erwähnten Hauptanmeldung, ein verbessertes Verfahren und eine verbesserte Vorrichtung bereit, wobei durch dieses verbesserte Verfahren und diese verbesserte Vorrichtung das unterschiedliche seitliche Gleiten der Abdeckfolienmaterialien im Verhältnis zur beabsichtigten Verbindungslinie innerhalb der eingepreßten Vertiefung des Trägers verhindert wird. Dies wird, allgemein ausgedrückt, dadurch erreicht, daß der Träger und die beiden Abdeckfolien, bevor und während die Abdeckfolienkanten in die Vertiefung des Trägers hineingeschoben und diese Vertiefung dann durch den Preßvorgang geschlossen wird, direkt an der Verbindungslinie entlang sicher festgehalten wird. Das vorliegende Verfahren und die vorliegende Vorrichtung bewirken eindeutig, daß die Verbindungslinie der beiden Abdeckfolien zu einer festen Bezugslinie wird und alle Gleit- und Dehnvorgänge im Verhältnis zu dieser Linie stattfinden. Durch die auf diese Weise erfolgende Definition der festen Bezugslinie entlang der Verbindungslinie findet der jeweils erforderliche Grad des Gleitens an den jeweils verschiedenen Stellen des Gleitrahmens statt, ohne daß sich die Verbindungslinie zum Ausgleich unterschiedlicher Spannungen oder dergleichen seitlich verschieben könnte. Aus diesem Grund wird es möglich, die Verbindungslinie zwischen den beiden Abdeckmaterialien in einer eingepreßten Vertiefung eines Trägers präzise zu positionieren und dort einzupressen, selbst wenn diese eingepreßte Vertiefung des Trägers eine komplizierte gebogene Kontur in zwei oder drei Dimensionen aufweist.

Das verbesserte Verfahren wird unter Verwendung einer verbesserten Vorrichtung durchgeführt, die die Merkmale der vorstehend erwähnten ursprünglichen Vorrichtung aufweist und zusätzlich eine Gegenklemmklinge im unteren Formabschnitt umfaßt, die mit der Preßklinge des oberen Formabschnitts zusammenwirkt, um dazwischen die Verbindungslinie der beiden Abdeckfolien in klemmender Weise festzuhalten. Die Gegenklemmklinge wird bewegbar von Kolbenstangen oder dergleichen getragen, so daß sich die Gegenklemmklinge nach oben bewegen kann, um sich mit der Preßklinge zu treffen, wobei der Träger und die Abdeckfolien dazwischen in klemmender Weise festgehalten werden, bevor eine durch den Formvorgang erfolgende Verformung des Trägers und der Abdeckfolien durchgeführt wird. Anschließend wird die Gegenklemmklinge in Einklang mit der sich nach unten in den Preßspalt hineinbewegenden Preßklinge nach unten in den Preßspalt des unteren Formabschnitts zurückgezogen. Danach wird der Preßspalt geschlossen, während die Preßklinge zurückgezogen wird, was im allgemeinen nach dem ursprünglichen Verfahren erfolgt.

### KURZBESCHREIBUNG DER ZEICHNUNGEN

Damit die vorliegende Erfindung eindeutig verstanden werden kann, wird sie nunmehr in Zusammenhang mit einer beispielhaften Ausführungsform unter Bezugnahme auf die beiliegenden Zeichnungen beschrieben; dabei sind:
- Fig. 1: eine schematische Draufsichtdarstellung einer vorlaminierten Folie mit auf einem Träger klebenden Abdeckfolien, die eine Draufsichtdarstellung der unteren Form einer Vorrichtung nach der ursprünglichen Erfindung der Hauptanmeldung überlagernd dargestellt ist;
- Fig. 2: eine schematische Seitenschnittdarstellung einer Formwerkzeugvorrichtung nach der ursprünglichen Erfindung in einer ersten Stufe des Formverfahrens;
- Fig. 3: eine Darstellung ähnlich derjenigen der Fig. 2, die jedoch die Formvorrichtung in einer nachfolgenden Stufe des Formverfahrens zeigt;
- Fig. 4: eine vergrößerte detaillierte Schnittdarstellung eines Abschnitts der Fig. 3, um die Preßfläche der Formvorrichtung zu veranschaulichen;
- Fig. 5: eine schematische Draufsichtdarstellung, die im allgemeinen Fig. 1 entspricht, jedoch zusätzlich einen Gleitrahmen zum Festhalten des Umfangs sowie eine Gegenklemmklinge zum Festhalten der Verbindungslinie der beiden Abdeckfolien nach der verbesserten Erfindung der vorliegenden Teilfortführungsanmeldung zeigt;
- Fig. 6: eine schematische Seitenschnittdarstellung einer Formvorrichtung nach der verbesserten Erfindung der vorliegenden Teilfortführungsanmeldung in einer ersten Stufe des Formverfahrens mit dem Festklemmen des Trägers und der Abdeckfolien entlang der Verbindungslinie;
- Fig. 7: eine Darstellung ähnlich derjenigen der Fig. 6, die jedoch die Formvorrichtung in einer nachfolgenden Stufe des Formverfahrens zeigt, in der der Träger und die Abdeckfolien noch entlang der Verbindungslinie festgehalten werden und in den Preßspalt hineinbewegt wurden;
- Fig. 8: eine Darstellung ähnlich derjenigen der Fig. 7, die jedoch die Formvorrichtung in einer weiteren nachfolgenden Stufe des Formverfahrens zeigt, in der der obere Formabschnitt damit begonnen hat, sich nach unten zu bewegen, und der Gleitrahmen sich nach unten bewegt hat;
- Fig. 9: eine Darstellung ähnlich derjenigen der Fig. 8, die jedoch die Formvorrichtung in einer noch weiteren nachfolgenden Stufe des Formverfahrens zeigt, in der die Preßklinge zurückgezogen, der Preßspalt geschlossen und die Form geschlossen wurde; und
- Fig. 10: eine vergrößerte detaillierte Schnittdarstellung eines Abschnitts der Fig. 9, um die Preßfläche der Formvorrichtung zu veranschaulichen.

### AUSFÜHRLICHE BESCHREIBUNG BEVORZUGTER BEISPIELHAFTER AUSFÜHRUNGSFORMEN UND DER BESTEN DURCHFÜHRUNGSART DER VORLIEGENDEN ERFINDUNG

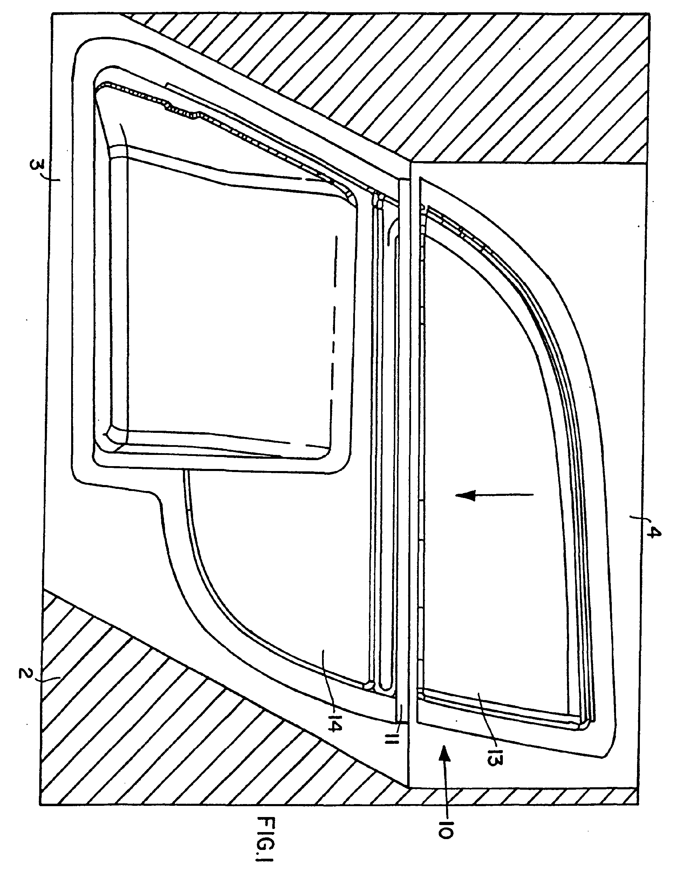

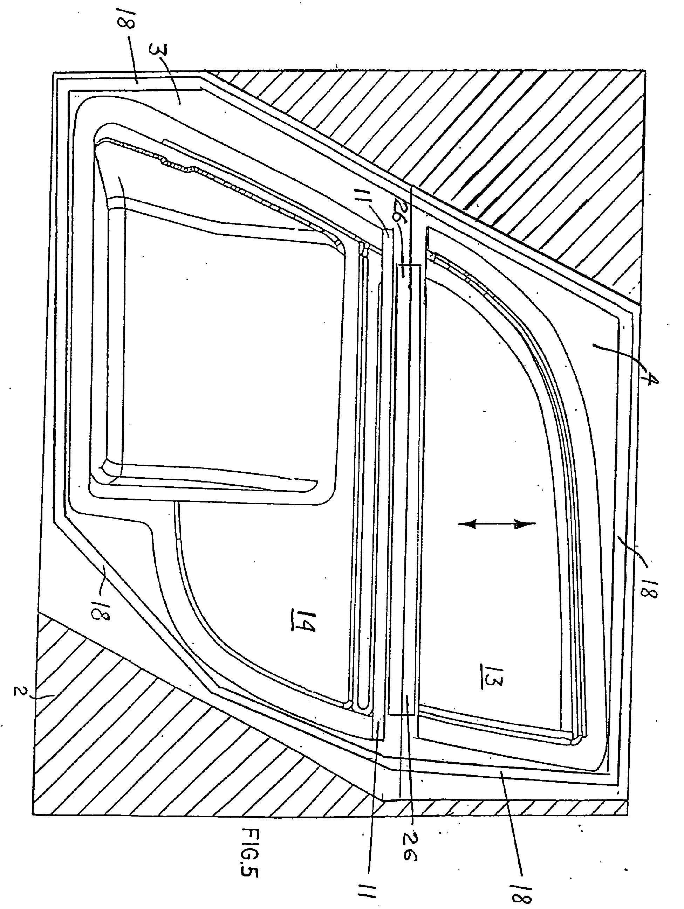

Die ursprüngliche Erfindung, die Gegenstand der vorerwähnten Hauptanmeldung 09/176,356 ist, wird zunächst in Zusammenhang mit den Figuren 1 bis 4 beschrieben. Das Verstehen dieser Figuren ist eine wesentliche Voraussetzung für das Verstehen des vorliegenden weiter verbesserten Verfahrens und der vorliegenden, weiter verbesserten Vorrichtung der vorliegenden Teilfortführungsanmeldung, weil das vorliegende, verbesserte Verfahren und die vorliegende, verbesserte Vorrichtung alle Merkmale der ursprünglichen Erfindung und weiterhin bestimmte Verbesserungen einschließen, die in Zusammenhang mit den Figuren 5 bis 10 nachfolgend zusätzlich beschrieben werden.

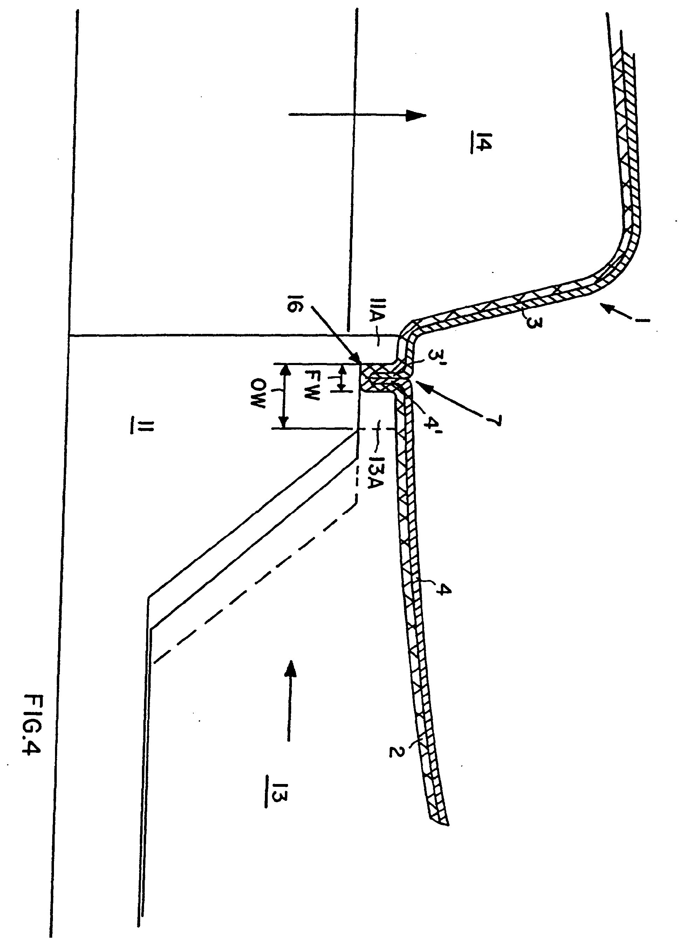

Wie aus den Figuren 1 und 4 ersichtlich, dient als ein Beispiel für ein Verkleidungsteil 1 nach vorliegender Erfindung eine Türinnenverkleidung für ein Auto, die einen Träger 2 mit zwei unterschiedlichen, darauf aufgebrachten Abdeckfolien, nämlich einer Abdeckfeinfolie 3 und einer Stoffabdeckung 4, umfaßt. Die beiden Abdeckfolien, nämlich die Feinfolie 3 und die Stoffabdeckung 4, werden vorher nicht zusammengefügt, sondern kommen statt dessen dadurch zusammen, daß ihre jeweiligen Randkanten 3' und 4' Kante an Kante aneinanderstoßend in einer Verbindungsfläche 7 angeordnet werden, die von einer im Träger 2 ausgebildeten Vertiefung 6 aufgenommen und in diese hineingepreßt wird. Die Feinfolie 3 und der Stoff 4 werden in klebender Weise direkt auf den Träger 2 aufgeklebt, ohne daß ein zusätzlicher Kleber oder dergleichen verwendet werden muß. Bei dem Stoff 4 handelt es sich beispielsweise um einen synthetischen Gewebestoff, der vorzugsweise ein Polyolefin umfaßt. Bei der Feinfolie 3 handelt es sich beispielsweise um eine Feinfolie aus thermoplastischem Polyolefin (TPO). Der Träger 2 ist vorzugsweise ein Trägermaterial, das Naturfasern, wie beispielsweise Kenafpflanzenfasern, und eine Polyolefinmatrix, wie beispielsweise Polypropylen, umfaßt. Bei dem Träger handelt es sich, besonders bevorzugt, um einen mehrschichtigen Träger, bei dem die verschiedenen Schichten unterschiedliche Zusammensetzungen aufweisen können. Das bevorzugte Polyolefinmaterial des Stoffs 4 und der Feinfolie 3 wird durch einen Schmelzklebereffekt direkt auf das Polypropylen des Trägers 2 aufgeklebt. Aufgrund der eingepreßten Vertiefung 6 kommt das Verkleidungsteil 1 ohne irgendeinen Kleber oder irgendeine Vernähung aus, und es ist somit nicht erforderlich, irgendeinen Kleber oder irgendeine Vernähung zur Verbindung der Randkanten 3' und 4' der Abdeckfeinfolie 3 und des Stoffs 4 oder für eine die Verbindungsfläche 7 abdeckende Zierleiste vorzusehen.

Ein beispielhaftes Verfahren und eine beispielhafte Vorrichtung zur Herstellung des vorliegenden Verkleidungsteils 1 werden nunmehr unter Bezugnahme auf die Figuren 1 bis 4 beschrieben. In vorbereitenden Schritten, die in den Zeichnungen nicht dargestellt sind, wird die Trägerfolie 2 in einer Wärmepresse auf die erforderliche Dichte und die erforderliche Temperatur zur Erzielung einer Schmelzkleberadhäsion an den Abdeckfolien vorgewärmt und vorverdichtet, wie nachstehend beschrieben. Die Abdeckfeinfolie 3 und der Abdeckstoff 4 werden separat auf die vorgewärmte und vorverdichtete Trägerfolie 2 aufgelegt, wobei der Schmelzklebereffekt des heißen Polypropylens des Trägers eine Verklebung der Feinfolie 3 und des Stoffs 4 auf der Trägerfolie 2 bewirkt. Um die Verklebung bei Bedarf zu verstärken, kann das Vorlaminat erneut gepreßt werden, um so die Abdeckfolien 3 und 4 fest auf dem Träger 2 zu verkleben. Die beiden Abdeckfolien 3, 4 werden beispielsweise mit einer entsprechenden Kante davon stumpf gegen eine dünne (z.B. 1 mm) Metallfolie anliegend angeordnet, die als Ausrichtungshilfe entlang der beabsichtigten Lage der Verbindungslinie 7 dient, und anschließend wird die Metallfolie zurückgezogen, um für die Folien 3, 4 eine im wesentlichen stumpf zueinander anliegende Anordnung Kante an Kante an der Verbindungslinie 7 entlang sicherzustellen.

Die resultierende vorlaminierte Folie wird um ihre Kanten herum von einem Gleitrahmen 18 gehalten, der dann die vorlaminierte Folie in ihre Position zwischen einer unteren Form 10 und einer oberen Form 20 transportiert. Da die beiden Abdeckfolien 3 und 4 bereits in ihrer Position fest fixiert und auf dem Träger 2 verklebt sind, besteht keine Notwendigkeit, einen separaten Transport- und Positionierrahmen für die Abdeckfolien 3 und 4 vorzusehen. Die Position der Abdeckfolien 3 und 4 auf dem Träger 2 wird fixiert, wenn die Abdeckfolien 3 und 4 auf den Träger 2 aufgelegt werden und daran ankleben. Somit unterliegt das ordnungsgemäße Einpassen der Abdeckfolien 3 und 4 auf dem Träger 2 bei der weiteren Verarbeitung der vorlaminierten Folie keinen Veränderungen. Wenn nämlich der Träger 2 durch den Gleitrahmen 18 korrekt positioniert wird, werden die Abdeckfolien 3 und 4 und die dazwischenliegende Verbindungsfläche 7 zwangsläufig ebenfalls korrekt positioniert, es sei denn, daß der Träger 2 und die Abdeckfolien 3 und 4 im Gleitrahmen 18 auf gegenüberliegenden Seiten der Verbindungsfläche 7 unterschiedlich gleiten. Ein solches unerwünschtes unterschiedliches Gleitphänomen kann durch das verbesserte Verfahren und die verbesserte Vorrichtung, die nachstehend in Zusammenhang mit den Figuren 5 bis 10 beschrieben werden, verhindert werden.

Fig. 1 ist eine schematische Draufsichtdarstellung der unteren Form 10, die die vorlaminierte Folie mit der Abdeckfeinfolie 3 und dem Stoff 4 zeigt, die auf der darüberliegenden Trägerfolie 2 klebt. In Fig. 1 sind die Komponenten der unteren Form 10 unterhalb der vorlaminierten Folie aus Gründen der Veranschaulichung durchsichtig dargestellt.

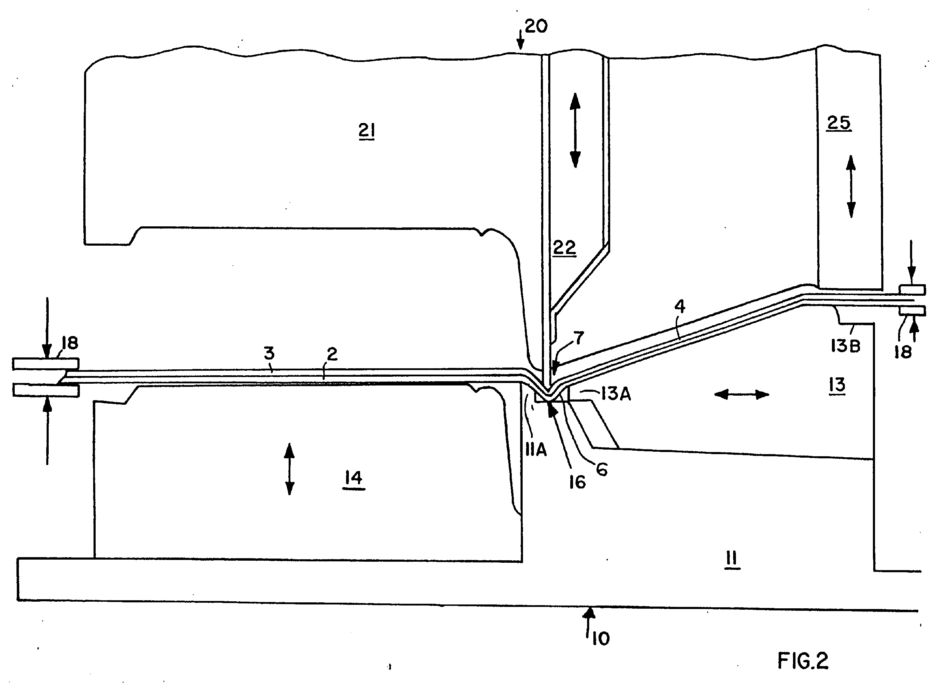

Wie aus Fig. 2 ersichtlich, wird die vorlaminierte Folie mit den Abdeckfolien 3 und 4 auf dem Träger 2 durch den Gleitrahmen 18 zwischen der unteren Form 10 und der oberen Form 20 in ihrer Position gehalten. In einem ersten Formschritt wird die obere Form 20 im allgemeinen nach unten in Position gegen die untere Form 10 bewegt. In einer ersten möglichen Folge von Schritten wird der untere primäre Formstempel 14 zunächst nach oben gegen den oberen primären Formstempel 21 bewegt, um so den Hauptabschnitt des Verkleidungsteils mit der Abdeckfeinfolie 3 zwischen den beiden Formstempeln 14 und 21 zu formen und zu bilden, und anschließend wird die Preßklinge 22 betätigt, wie nachstehend beschrieben. In einer alternativen bevorzugten Folge von Formschritten wird der erste Formkontakt- oder geschlossene Abschnitt der Formwerkzeuge dadurch gebildet, daß die Preßklinge 22 nach unten in einen in der unteren Form 10 ausgebildeten Preßspalt 16 hineinbewegt wird. Indem zunächst dieser Schritt durchgeführt wird, werden die korrekte Lage und das Festhalten der Verbindungsfläche 7 der Abdeckfeinfolie 3 und des Abdeckstoffs 4 im Preßspalt 16 unterstützt, ohne daß es zu einer Beeinträchtigung durch eine auf die vorlaminierte Folie ausgeübte Spannung kommt, die durch den zwischen dem unteren primären Formstempel 14 und dem oberen primären Formstempel 21 durchgeführten Formvorgang bewirkt wird.

Die untere Form 10 umfaßt ein feststehendes Werkzeugsegment 11 mit einer vorstehenden Kante oder einem vorstehenden Rand 11A, sowie einen Preßstempel 13 mit einer vorstehenden Kante oder einem vorstehenden Rand 13A, der im Verhältnis zum feststehenden Werkzeugsegment 11 horizontal bewegbar ist. Der Preßspalt 16 wird zwischen der vorstehenden Kante 11A des feststehenden Werkzeugsegments 11 und der vorstehenden Kante 13A des Preßstempels 13 gebildet. Anfänglich weist der Preßspalt 16, wie aus Fig. 2 ersichtlich, eine relativ große Breite auf, d.h. dieser Spalt 16 ist geöffnet, weil der horizontal bewegbare Preßstempel 13 anfänglich nach rechts zurückgezogen wird und noch nicht nach links geschoben wurde. Wenn somit die Preßklinge 22 die Verbindungsfläche 7 der vorlaminierten Folie nach unten in den Preßspalt 16 hineinpreßt und entsprechend die Vertiefung 6 im Träger ausbildet, besteht anfänglich ein ziemlich großer Spiel- oder Toleranzbereich, und innerhalb dieses Bereichs ist noch sichergestellt, daß die eigentliche Verbindung 7 der Feinfolie 3 und des Stoffs 4 von der Vertiefung 6 innerhalb des Preßspalts 16 aufgenommen wird. Aus diesem Grunde muß der Gleitrahmen 18 die vorlaminierte Folie nicht mit äußerster Präzision, sondern lediglich mit ausreichender Präzision transportieren und festhalten, um die Verbindung 7 über dem weit geöffneten Preßspalt 16 zu plazieren.

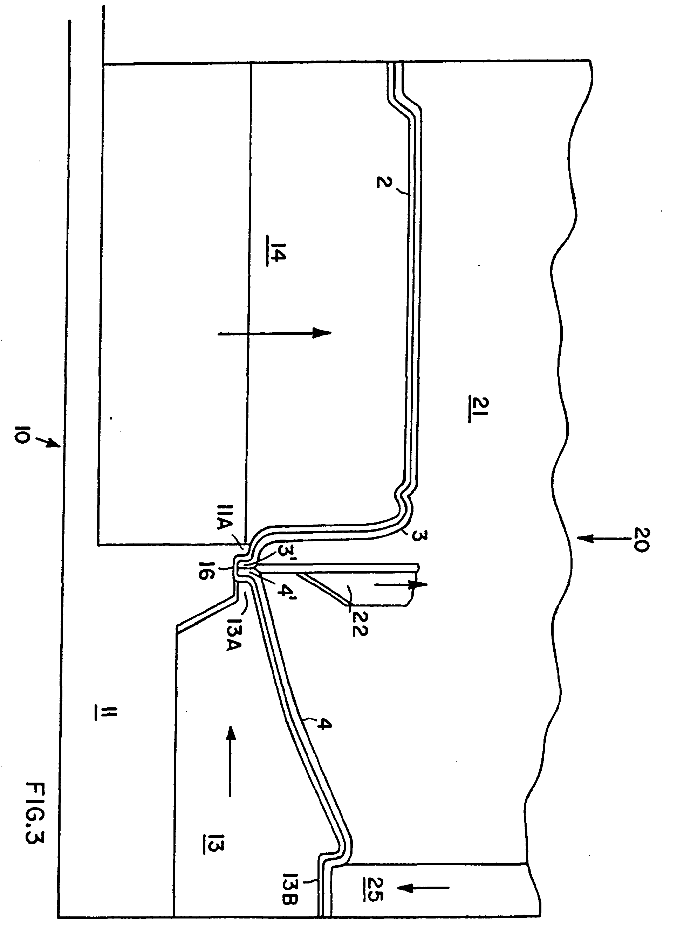

Fig. 3 zeigt eine nachfolgende Stufe des Formverfahrens. Der Preßstempel 13 wurde nach links gedrückt, um so den Preßspalt 16 zu schließen, d.h. die Vertiefung 6 des Trägers 2 um die Verbindungsfläche 7 herum zwischen der vorstehenden Kante 13A des Preßstempels 13 und der vorstehenden Kante 11A des feststehenden Werkzeugsegments 11 durch Pressen zu schließen. Während sich der Preßstempel 13 weiterhin nach links bewegt, wird die Preßklinge 22 nach oben zurückgezogen, und der Preßstempel 13 bringt seine nach links erfolgende Preßbewegung zum Abschluß, nachdem die Klinge 22 vollständig zurückgezogen wurde. Als Folge davon ist es möglich, die Vertiefung 6 im Träger 2 durch Pressen vollständig zu schließen, wobei die Randkanten 3' und 4' der Feinfolie 3 und des Stoffs 4 zwischen der vorstehenden Kante 13A und der vorstehenden Kante 11A eng in die geschlossene Vertiefung 6 hineingepreßt werden.

Sobald der Preßvorgang durch den Preßstempel 13 vollständig oder im wesentlichen abgeschlossen ist, wird der untere Formstempel 14 nach oben gegen den oberen Formstempel 21 gepreßt, während der obere Formstempel 21 gleichzeitig nach unten gegen den Preßstempel 13 drückt. Auf diese Weise wird der mit der Abdeckfeinfolie 3 versehene Abschnitt des Verkleidungsteils 1 zwischen dem unteren Formstempel 14 und dem oberen Formstempel 21 geformt und laminiert, während der mit dem Abdeckstoff 4 versehene Abschnitt des Verkleidungsteils 1 zwischen dem oberen Formstempel 21 und dem Preßstempel 13 geformt und laminiert wird. In dieser Stufe wird auch der Kantenkräuselring 25 nach unten bewegt, um die Außenumfangskante des Verkleidungsteils 1 zwischen dem Kräuselring 25 und dem Außenrand 13B des Preßstempels 13 zu kräuseln.

Wie aus Fig. 3 und aus der Detaildarstellung der Fig. 4 ersichtlich, entspricht die Oberseitenkontur des unteren Formstempels 14, des feststehenden Werkzeugsegments 11 und des die untere Form 10 bildenden Preßstempels 13 im wesentlichen der Unterseitenkontur des oberen Formstempels 21 und des Kantenkräuselrings 25. Diese Oberflächenkontur zwischen der unteren Form 10 und der oberen Form 20 definiert auch die Kontur des fertigen Verkleidungsteils 1.

In der Detaildarstellung der Fig. 4 ist der Preßstempel 13 in seiner äußersten linken Preßposition mit durchgezogenen Linien und in seiner äußersten rechten offenen Position mit gestrichelten Linien dargestellt. Die geschlossene oder eingepreßte Vertiefung 6 im Träger 2 ist ebenfalls klar erkennbar, wobei die Verbindung 7 der Randkanten 3' und 4' der Abdeckfeinfolie 3 und des Stoffs 4 vollständig innerhalb der Nut oder Vertiefung 6 aufgenommen ist. Wie aus der Darstellung erkennbar, ist die fertige Verbindungsfläche 7 ein sauberer oder gekräuselter Übergang zwischen der Abdeckfeinfolie 3 und dem Stoff 4 ohne einen Spalt, eine Öffnung oder die Notwendigkeit, dazwischen eine Zierleiste vorsehen zu müssen. Die fertige Breite FW der eingepreßten Vertiefung 6 ist somit viel geringer als die offene Breite OW des zwischen der vorstehenden Kante 13A des Preßstempels 13 und der vorstehenden Kante 11A des feststehenden Werkzeugsegments 11 gebildeten Preßspalts 16, wenn sich der Preßstempel 13 in seiner anfänglichen rechten Position befindet. Wie vorstehend erläutert, ist es die offene Breite OW des Preßspalts 16 sowie die Tiefe des Spalts, die den Toleranzbereich definiert, innerhalb dessen die Verbindung 7 positioniert sein kann, um die Verbindung 7 in der fertigen eingepreßten Vertiefung 6 zuverlässig aufzunehmen und zu umschließen.

Sobald sich die Formvorrichtung in dem in den Figuren 3 und 4 dargestellten Zustand befindet, wird dieser Zustand für eine kurze Kühlzeit aufrechterhalten, für die die Formen vorzugsweise mit Flüssigkeit gekühlt werden. Durch diese vorbereitende Kühlung wird der Träger 2 ausreichend versteift, um die eingepreßte Form der Vertiefung 6 mit der Verbindung 7 darin fest- und beizubehalten, nachdem die Form wie folgt geöffnet wurde. Um die Form zu öffnen, wird der Kantenkräuselring 25 nach oben zurückgezogen, und der obere und der untere primäre Formstempel 21 und 14 werden in ihre anfänglichen Positionen zurückbewegt, während der Preßstempel 13 nach rechts zurückbewegt wird, nachdem seine Bewegung durch den Eingriff des Kantenkräuselrings 25 nicht länger blockiert wird. Sobald die Form offen ist, kann das geformte Verkleidungsteil herausgenommen werden, und es kann sich vollständig abkühlen. Durch das Abkühlen versteift der Träger 2, so daß die eng eingepreßte Form der Vertiefung 6 gehalten und das gesamte Teil 1 formstabil gemacht wird, d.h. ausreichend steif, um die geformte Konfiguration davon beizubehalten.

Nunmehr wird das verbesserte Verfahren und die verbesserte Vorrichtung der vorliegenden Teilfortführungsanmeldung unter Bezugnahme auf die Figuren 5 bis 10 beschrieben. Die meisten der Komponenten und Merkmale in Zusammenhang mit den Figuren 5 bis 10 entsprechen denjenigen, die vorstehend in Zusammenhang mit den Figuren 1 bis 4 beschrieben wurden, und die gleichen Elemente sind in allen Zeichnungen mit den gleichen Bezugszahlen gekennzeichnet. Außerdem wird auf eine überflüssige Beschreibung der Komponenten und der Schritte des Verfahrens verzichtet, und es werden lediglich die speziellen Unterschiede oder Verbesserungen des vorliegenden Verfahrens und der vorliegenden Vorrichtung im Vergleich zu den vorstehenden Ausführungen herausgestellt.

Fig. 5 entspricht im allgemeinen Fig. 1, mit der Ausnahme, daß sie zusätzlich den vorstehend beschriebenen Gleitrahmen 18 und die Gegenklemmklinge 26 zeigt, die ein Teil der unteren Form 10 in der verbesserten erfindungsgemäßen Vorrichtung ist.

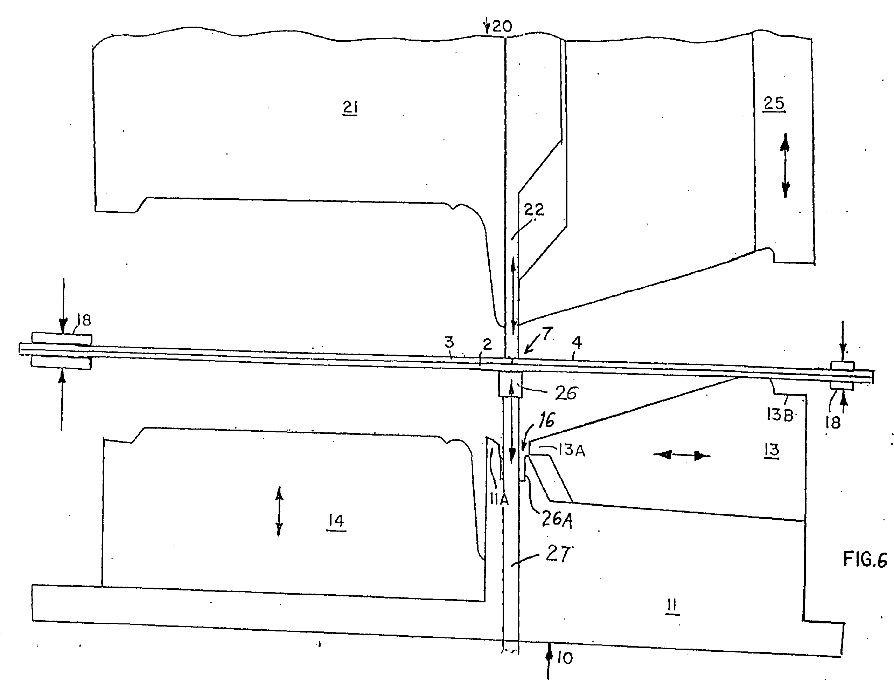

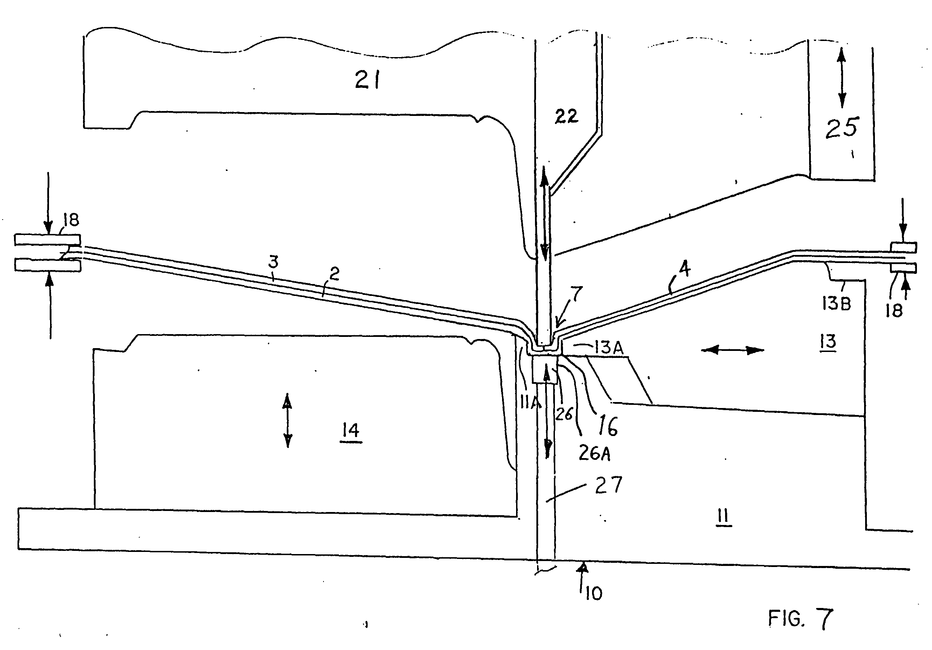

Fig. 6 entspricht im allgemeinen der vorstehend beschriebenen Fig. 2, zeigt jedoch eine frühere Stufe des Formverfahrens unter Verwendung des vorliegenden verbesserten Verfahrens und der vorliegenden verbesserten Vorrichtung. Wie aus Fig. 6 ersichtlich, umfaßt die untere Form 10 weiterhin eine Gegenklemmklinge 26, die sich an der Länge der beabsichtigten Verbindung 7 entlang zwischen der Feinfolie 3 und dem Stoff 4 erstreckt, die die beiden unterschiedlichen Abdeckfolien darstellen, wie in Fig. 5 dargestellt. Die Gegenklemmklinge 26 ist, beispielsweise durch zwei Kolbenstangen 27, an den jeweiligen gegenüberliegenden Enden der Gegenklemmklinge 26 bewegbar abgestützt. Die Kolbenstangen 27 können durch pneumatische Zylinder oder hydraulische Zylinder oder mechanische Antriebe betätigt werden, um die Gegenklemmklinge 26, wie nachstehend beschrieben, anzuheben und abzusenken. Wie weiterhin in Fig. 6 gezeigt, umfaßt das feststehende Werkzeugsegment 11 eine eingelassenen Mulde 26A, in die die Gegenklemmklinge 26 zurückgezogen werden kann, wie in Fig. 7 dargestellt. In der in Fig. 6 gezeigten Position oder dem darin dargestellten Schritt wurde die Gegenklemmklinge 26 jedoch durch die Kolbenstangen 27 nach oben angehoben, so daß die Gegenklemmklinge 26 im wesentlichen mit der vorderen Kante der Preßklinge 22 zusammentrifft und damit zusammenwirkt, um so die Verbindungsfläche 7 der vorlaminierten Folie 2, 3, 4 zwischen der Gegenklemmklinge 26 und der Preßklinge 22 am Schnittpunkt der horizontalen Ebene, wo die vorlaminierte Folie im Gleitrahmen 18 abgestützt wird, mit der vertikalen Ebene des Preßspalts 16 einzuklemmen.

Im allerersten Schritt des verbesserten Formverfahrens wird die Verbindungsfläche 7 der vorlaminierten Folie 2, 3, 4 zwischen der Gegenklemmklinge 26 und der Preßklinge 22 fest eingeklemmt und gesichert. Dies dient dazu, die Verbindungsfläche 7 in der entsprechenden Position im Verhältnis zum Preßspalt 16 der unteren Form korrekt zu plazieren und zu fixieren. Dadurch wird weiterhin sichergestellt, daß die vorlaminierte Folie 2, 3, 4, unabhängig von irgendeiner unterschiedlichen Spannung oder Dehnung, die die vorlaminierten Folien an gegenüberliegenden Seiten der Verbindungsfläche 7 beeinträchtigen könnte, nicht seitlich aus der korrekten Ausrichtung gegenüber dem Preßspalt 16 herausgleiten oder - rutschen können. Ein ausgleichender Gleitvorgang findet somit notwendigerweise am Gleitrahmen 18 statt, um jede unterschiedliche Spannung oder Dehnung aufzufangen, während die vorlaminierte Folie in nachfolgenden Schritten geformt wird, so daß die Verbindungsfläche 7 am Preßspalt 16 präzise und korrekt eingeklemmt wird.

In der in Fig. 7 dargestellten Stufe des Verfahrens haben sich die Preßklinge 22 und die Gegenklemmklinge 26 im Einklang miteinander nach unten bewegt, während die Verbindungsfläche 7 weiterhin eingeklemmt bleibt. Dadurch wurde die Verbindungsfläche 7 präzise nach unten in den Preßspalt 16 hineingepreßt, wobei eine korrekte Ausrichtung der Verbindung 7 am gesamten Preßspalt 16 entlang sichergestellt bleibt, selbst wenn sich dieser Preßspalt und die Verbindung 7 an einer kompliziert gebogenen Kontur entlang in zwei oder drei Dimensionen erstreckt. Die Gegenklemmklinge 26 wurde nach unten in die eingelassene Mulde 26A im feststehenden Werkzeugsegment 11 zwischen der vorstehenden Kante 11A des feststehenden Werkzeugsegments 11 und der vorstehenden Kante 13A des Preßstempels 13 zurückgezogen. Dadurch begrenzen und bilden die Seitenwände der vorstehenden Kanten 11A und 13A zusammen mit der Oberseite der Gegenklemmklinge 26 den dazwischenliegenden Preßspalt 16.

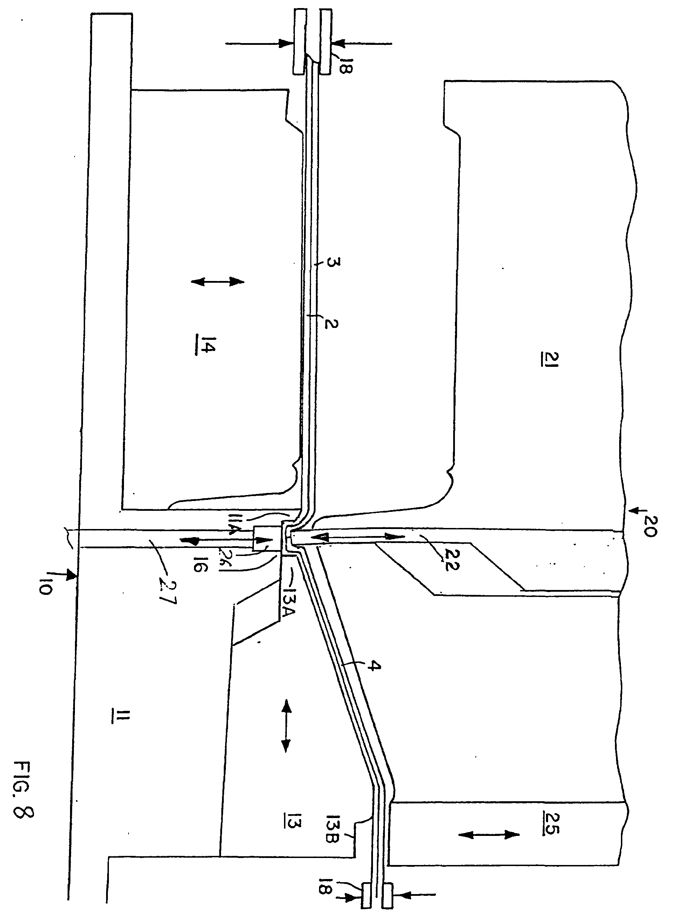

Fig. 8 zeigt eine nächste Stufe des Verfahrens, in der sich der obere Formstempel 21 nach unten zum unteren Formstempel 14 und zum feststehenden Basiswerkzeugsegment 11 der unteren Form 10 hin bewegt hat. Die Preßklinge 22 hat ihre Position im Verhältnis zur Gegenklemmklinge 26 und zum Preßspalt 16 beibehalten, während sie im Verhältnis zum oberen Formstempel 21 zurückgezogen wurde. Anders ausgedrückt: Der obere Formstempel 21 hat sich (zusammen mit dem Kräuselring 25) unabhängig von der Preßklinge 22, die unbewegt bleibt und weiterhin gegen die Gegenklemmklinge 26 geklemmt wird, nach unten bewegt. Dadurch wird sichergestellt, daß die Verbindungsfläche 7 ständig und korrekt im Preßspalt 16 eingeklemmt bleibt.

Auch in diesem Schritt hat sich der Gleitrahmen 18 zusammen mit dem oberen Formstempel 21 im erforderlichen Umfang nach unten bewegt, um den Träger 2 der vorlaminierten Folie 2, 3, 4 auf die Oberseite des unteren Formstempels 14 und ebenfalls auf die Oberseite des Preßstempels 13 aufzulegen. Auf diese Weise kann eine Faltenbildung und eine ungleichmäßige Dehnung der vorlaminierten Folie im nachfolgenden Formschritt verhindert werden.

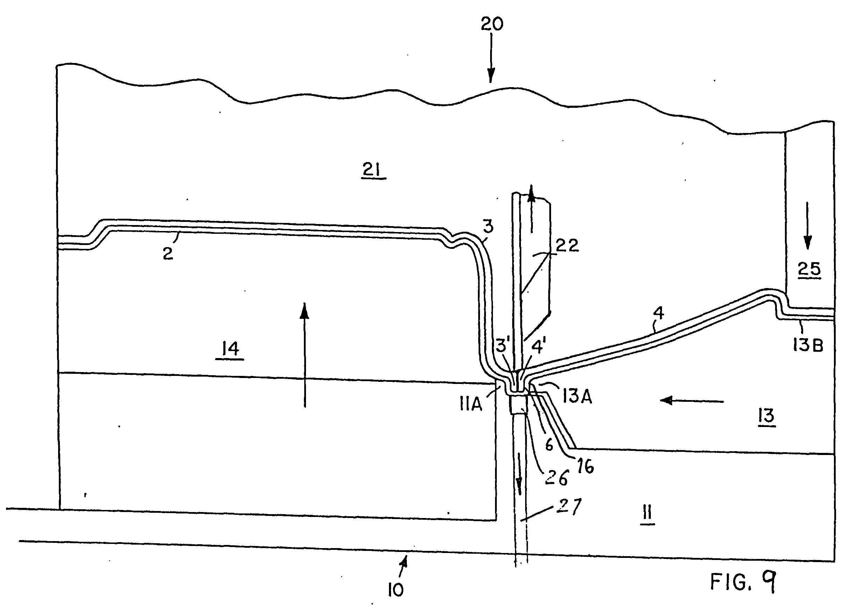

Im Übergang von Fig. 8 zu Fig. 9 wurde die obere Form 20 mit dem oberen Formstempel 21 und dem Kräuselring 25 nach unten bewegt, während der untere Formstempel 14 nach oben und der Preßstempel 13 nach links geschoben wird, um so die vorlaminierte Folie 2, 3, 4 zwischen den Berührungsflächen des oberen Formstempels 21 und des unteren Formstempels 14 und den Berührungsflächen des oberen Formstempels 21 und des Preßstempels 13 zu formen. Während der Preßstempel 13 nach links geschoben wird, wird die Preßklinge 22 im wesentlichen gleichzeitig nach oben zurückgezogen, so daß die vorstehende Kante 13A des Preßstempels 13 die Vertiefung 6 des Trägers 2 durch Pressen schließt, wobei die Randkanten 3' und 4' der Feinfolie 3 und des Stoffs 4 Rücken an Rücken eng in der geschlossenen Vertiefung 6 eingepreßt werden.

Das Einklemmen und Festhalten der Verbindungsfläche 7 zwischen der Gegenklemmklinge 26 und der Preßklinge 22 werden bis zum allerletzten Moment aufrechterhalten, bevor der Preßspalt 16 zwischen den vorstehenden Kanten 11A und 13A geschlossen wird, um die Nut oder Vertiefung 6 des Trägers 2 durch Pressen zu schließen. Dadurch wird sichergestellt, daß die Verbindungsfläche 7 in der durch Pressen geschlossenen Vertiefung 6 präzise ausgerichtet wird. Eine etwaige Dehnung oder ein Ziehen des Trägers 2 und der Abdeckfolien 3 und 4 während des Formverfahrens wird durch ein im entsprechenden Umfang erfolgendes Gleiten der vorlaminierten Folie 2, 3, 4 im Gleitrahmen an den Kanten der Formausrüstung an gegenüberliegenden Seiten der Verbindungsfläche 7 ausgeglichen, während die Verbindungsfläche 7 selbst im Preßspalt 16, wie vorstehend beschrieben, präzise und exakt eingeklemmt festgehalten wird. Sobald der Preßstempel 13 nach links bewegt wurde, bewegt sich der Kräuselring 25 nach unten, um die Außenumfangskante des Verkleidungsteils 1 zwischen dem Kräuselring 25 und dem Außenrand 13B des Preßstempels 13 zu kräuseln.

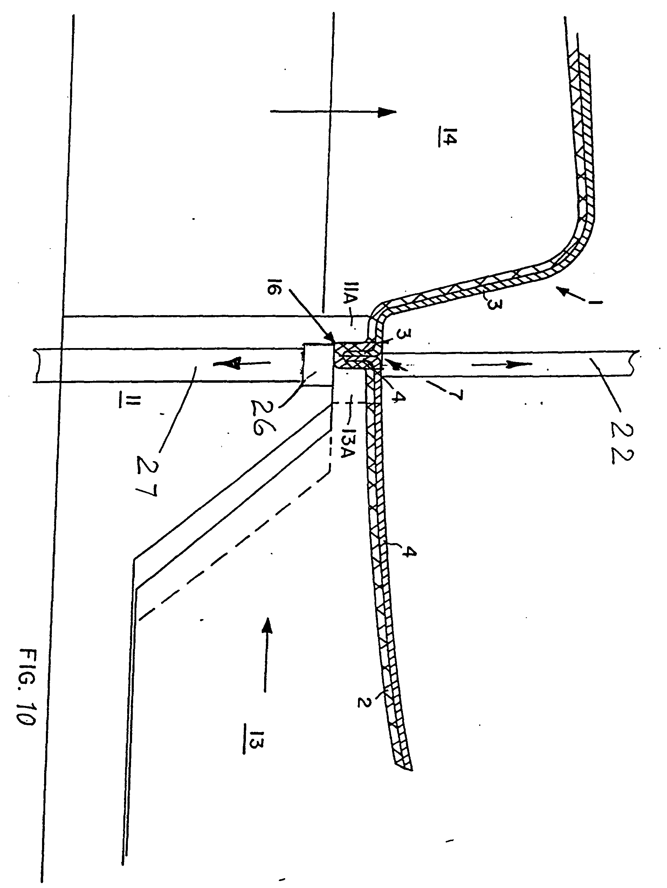

Die vergrößerte Detaildarstellung der Fig. 10 entspricht derjenigen der vorstehend beschriebenen Fig. 4, mit der Ausnahme, daß sie zusätzlich die Anordnung der auf einer oder mehreren Kolbenstangen 27 oder dergleichen abgestützten Gegenklemmklinge 26 zeigt, wie im feststehenden Werkzeugsegment 11 der unteren Form angeordnet. Die weitere Durchführung des Formverfahrens und das Öffnen der Form entsprechen dem vorstehend beschriebenen ursprünglichen Verfahren.

Es versteht sich, daß die Betätigungsbewegung der Preßklinge 22 und der die Gegenklemmklinge 26 antreibenden Kolbenstangen 27 oder dergleichen durch entsprechende Regulierung des pneumatischen oder hydraulischen Drucks, der auf die Zylinder oder anderen Betätigungsorgane zum Antrieb dieser Komponenten ausgeübt wird, kontrolliert werden kann. Indem ein Regulierventil auf einen spezifizierten Druck eingestellt wird, wird beispielsweise die Position der Gegenklemmklinge 26 bis zu einer vorgeschriebenen Klemmkraft beibehalten, wenn aber eine höhere Kraft dagegen ausgeübt wird (z.B. durch die sich nach unten mit einem höheren Antriebsdruck gegen die Gegenklemmklinge 26 bewegende Preßklinge 22), ziehen sich die die Gegenklemmklinge 26 abstützenden Kolben 27 automatisch zurück, während das spezifizierte Gegenhaltedruck- und Entlüftungsdruckmedium über dem regulierten Druck aufrechterhalten wird. Auf diese Weise können die Preßklinge 22 und die Gegenklemmklinge 26 leicht dazu veranlaßt werden, sich im Einklang zu bewegen, während eine spezifizierte, auf die Verbindungsfläche 7 einwirkende Klemmkraft aufrechterhalten wird. Gleiches gilt für die Bewegung des oberen Formstempels 21 und der Preßklinge 22 im Verhältnis zueinander.

Die erfindungsgemäßen Verkleidungsteile können in Kraftfahrzeugen im weitesten Sinne verwendet werden, so beispielsweise für Autos, Lastkraftwagen, Eisenbahnwaggons, Flugzeuge, Freizeitfahrzeuge und Schiffe sowie für zahlreiche andere Anwendungen, wie beispielsweise Wohnwagen und Fertighäuser. Obwohl die vorliegende Erfindung unter Bezugnahme auf spezifische beispielhafte Ausführungsformen beschrieben wurde, versteht es sich, daß sie alle Modifizierungen und gleichwertige Ausführungen innerhalb des Schutzbereichs der beiliegenden Ansprüche abdecken soll. Es versteht sich außerdem, daß die vorliegende Erfindung alle möglichen Kombinationen individueller Merkmale umfaßt, wie sie in den beiliegenden Ansprüchen angegeben sind. Obwohl die Preßbewegung des Preßstempels 13 als eine im wesentlichen senkrecht zur Gesamtbewegung der oberen Form 20 und der unteren Form 10 erfolgende Bewegung dargestellt ist, könnte sich der Preßstempel 13 alternativ auch schiefwinklig oder im allgemeinen in einem Winkel von 45° bis 135° im Verhältnis zur Richtung der Formgesamtbewegung bewegen, um beispielsweise unterschiedliche Preßeffekte zu erzielen.

## Patentansprüche

1. Vorrichtung zum Formen eines Verkleidungsteils,
wobei die Vorrichtung einen ersten Formabschnitt und einen zweiten Formabschnitt umfaßt, die im Verhältnis zueinander in einer ersten Richtung bewegbar sind, um dazwischen das Verkleidungsteil zu formen,
bei der der erste Formabschnitt ein Basiswerkzeugsegment mit einem ersten Rand sowie einen Preßstempel umfaßt, der im Verhältnis zum Basiswerkzeugsegment in einer zweiten Richtung in einem Winkel im Verhältnis zur ersten Richtung bewegbar ist und der einen dem ersten Rand gegenüberliegenden zweiten Rand mit einem dazwischen ausgebildeten Preßspalt umfaßt, so daß der Preßspalt über eine variable Spaltbreite verfügt, die auf Bewegungen des Preßspalts in der zweiten Richtung im Verhältnis zum Basiswerkzeugsegment anspricht,
bei der der zweite Formabschnitt eine Preßklinge umfaßt, die in der ersten Richtung in einer durch den Preßspalt verlaufenden Ebene bewegbar ist, so daß die Preßklinge in den Preßspalt hineinbewegt und daraus zurückgezogen werden kann, und
bei der der erste Formabschnitt weiterhin eine Gegenklemmklinge umfaßt, die im Verhältnis zum Basiswerkzeugsegment und im Verhältnis zum Preßstempel in der ersten Richtung in der durch den Preßspalt verlaufenden Ebene bewegbar ist, so daß die Gegenklemmklinge mit der Preßklinge zusammenwirkt, um dazwischen während der gemeinsamen Bewegung in den Preßspalt hinein das Verkleidungsteil festzuklemmen.

2. Vorrichtung nach Anspruch 1, bei der der erste Formabschnitt weiterhin einen ersten Formstempel umfaßt, der in der ersten Richtung im Verhältnis zum Basiswerkzeugsegment und zum zweiten Formabschnitt bewegbar ist, bei der der zweite Formabschnitt weiterhin einen zweiten Formstempel und einen Kantenkräuselstempel umfaßt, und bei der der Kantenkräuselstempel in der ersten Richtung im Verhältnis zum zweiten Formstempel und zum ersten Formabschnitt bewegbar und so ausgerichtet ist, daß er mit einem Kantenrand des Preßstempels zusammenwirkt, um dazwischen eine Kante des Verkleidungsteils zusammenzudrücken.

3. Vorrichtung nach Anspruch 1, bei der das Basiswerkzeugsegment eine an den ersten Rand an einem Boden des Preßspalts angrenzende und daran entlang verlaufende eingelassene Mulde aufweist, und bei der die eingelassene Mulde und die Gegenklemmklinge jeweils entsprechend dimensioniert und konfiguriert sind, so daß die Gegenklemmklinge in die eingelassene Mulde am Boden des Preßspalts entlang bündig zurückgezogen werden kann.

4. Vorrichtung nach Anspruch 3, die weiterhin mindestens eine Betätigungsstange umfaßt, die mit der Gegenklemmklinge verbunden ist und diese bewegbar trägt, so daß die Gegenklemmklinge wahlweise in die eingelassene Mulde hinein zurückgezogen oder wahlweise ausgefahren werden kann, um aus dem Preßspalt herauszuragen.

5. Vorrichtung nach Anspruch 1, bei der der Winkel der zweiten Richtung im Verhältnis zur ersten Richtung ein senkrecht verlaufender Winkel ist.

6. Vorrichtung nach Anspruch 1, bei der der erste Rand im Verhältnis zum Basiswerkzeugsegment unbewegbar fixiert ist.

7. Vorrichtung nach Anspruch 1, die weiterhin einen an einer Umfangskante der ersten und zweiten Formabschnitte angeordneten Gleitrahmen umfaßt, der so ausgeführt ist, daß er das Verkleidungsteil festklemmt, während es dem Verkleidungsteil ermöglicht wird, abhängig von einer darauf einwirkenden Spannung zu gleiten.

8. Verfahren zum Betreiben der Vorrichtung nach Anspruch 1, wobei das Verfahren folgende Schritte umfaßt:
a) Positionieren einer zu formenden Folie, um zwischen dem ersten und zweiten Formabschnitt das Verkleidungsteil zu formen;
b) Relatives, zueinander erfolgendes Bewegen der Preßklinge und der Gegenklemmklinge in der ersten Richtung, um die Folie zwischen der Preßklinge und der Gegenklemmklinge in festklemmendem Eingriff zu halten;
c) Gemeinsames, im Einklang erfolgendes Bewegen der Preßklinge und der Gegenklemmklinge in der ersten Richtung, um die Folie in den Preßspalt hineinzupressen, während die Folie weiterhin in festklemmendem Eingriff gehalten wird;
d) Bewegen des Preßstempels in der zweiten Richtung, um die variable Spaltbreite des Preßspalts zwischen dem ersten Rand und dem zweiten Rand zu reduzieren, während gleichzeitig die Preßklinge von der Gegenklemmklinge weg zurückgezogen und in der ersten Richtung aus dem Preßspalt herausgezogen wird, um eine Vertiefung zu bilden und die Vertiefung in der Folie durch Pressen zu schließen.

9. Verfahren nach Anspruch 8, bei dem der erste Formabschnitt einen ersten Formstempel umfaßt, der in der ersten Richtung im Verhältnis zum Basiswerkzeugsegment und zum zweiten Formabschnitt bewegbar ist, wobei der zweite Formabschnitt weiterhin einen zweiten Formstempel und einen Kantenkräuselstempel umfaßt, und wobei der Kantenkräuselstempel in der ersten Richtung im Verhältnis zum zweiten Formstempel und zum ersten Formabschnitt bewegbar und so ausgerichtet ist, daß er mit einem Kantenrand des Preßstempels zusammenwirkt, um dazwischen eine Kante des Verkleidungsteils zusammenzudrücken,
wobei die Methode, nach erfolgtem Schritt d), weiterhin folgende Schritte umfaßt:
e) Relatives, zueinander erfolgendes Bewegen des ersten und des zweiten Formstempels, um dazwischen die Folie zu bilden;
f) Bewegen des Kantenkräuselstempels zum Kantenrand des Preßstempels hin, um dazwischen eine Kante der Folie zusammenzudrücken;
g) Zurückziehen des Kantenkräuselstempels und des ersten und zweiten Formstempels, und
h) Zurückziehen des Preßstempels.

10. Verfahren nach Anspruch 8, bei dem die Folie einen Träger und zwei separate Abdeckfolien umfaßt, wobei das Verfahren weiterhin einen vorbereitenden Schritt des Plazierens und Verklebens der Oberflächen der beiden Abdeckfolien auf dem Träger umfaßt, wobei zwei jeweilige Kanten der Abdeckfolien Kante an Kante an einer Verbindungslinie entlang stumpf aneinanderstoßend angeordnet werden, und wobei die Schritte a), b), c) und d) so durchgeführt werden, daß die Preßklinge und die Gegenklemmklinge die Folie direkt an der Verbindungslinie entlang in festklemmendem Eingriff halten und daß sich, nachdem der Schritt d) durchgeführt wurde, die Verbindungslinie vollständig in der durch Pressen verschlossenen Vertiefung befindet.

11. Verfahren nach Anspruch 10, bei dem die Vorrichtung weiterhin einen an einer Umfangskante des ersten und zweiten Formabschnitts angeordneten Gleitrahmen umfaßt, der so ausgeführt ist, daß er das Verkleidungsteil in festklemmender Weise hält, während ein Gleiten des Verkleidungsteils abhängig von dessen Spannung ermöglicht wird, wobei das Verfahren weiterhin jeweils ein unterschiedliches Gleiten der Folie im Gleitrahmen an gegenüberliegenden Seiten der Verbindungslinie umfaßt.

12. Verfahren zum Formen eines Verkleidungsteils, das einen Träger und zwei Abdeckfolien umfaßt, die sich an einer Verbindungslinie entlang treffen, wobei das Verfahren die folgenden Schritte umfaßt:
a) Positionieren und Verkleben der Oberflächen der beiden Abdeckfolien auf dem Träger, so daß die Abdeckfolien Kante an Kante an der Verbindungslinie entlang aneinanderstoßend angeordnet sind;
b) Halten des Verkleidungsteils in festklemmender Weise zwischen einem Preßwerkzeug und einem Gegenklemmwerkzeug, die sich jeweils an der Verbindungslinie entlang an gegenüberliegenden Seiten des Verkleidungsteils befinden;
c) Bewegen des Preßwerkzeugs und des Gegenklemmwerkzeugs in Einklang miteinander, während das dazwischen erfolgende Festhalten des Verkleidungsteils beibehalten wird, um einen Abschnitt des Verkleidungsteils an der Verbindungslinie entlang in einen Formpreßspalt hineinzubewegen;
d) Schließen des Formpreßspalts, während das Preßwerkzeug vom Gegenklemmwerkzeug weg zurückgezogen wird, um eine Vertiefung des Trägers im Formpreßspalt zu bilden und durch Pressen zu schließen, wobei Kanten der beiden Abdeckfolien an der Verbindungslinie entlang von der durch Pressen geschlossenen Vertiefung aufgenommen werden; und
e) Fertigstellen des Formens eines Rests des Verkleidungsteils von der Verbindungslinie weg.
